Europäisches Patentamt

European Patent Office

Office européen des brevets

(19)

(11) EP 0 589 166 B1

(12) EUROPÄISCHE PATENTSCHRIFT

(45) Veröffentlichungstag und Bekanntmachung des Hinweises auf die Patenterteilung:
22.10.1997 Patentblatt 1997/43

(21) Anmeldenummer: 93111520.8

(22) Anmeldetag: 19.07.1993

(51) Int Cl.⁶: C07F 15/02, C07F 15/04,
C07F 15/06, C08G 59/18,
C08G 59/70, C08G 18/22,
C08G 71/04, C07F 1/00,
C07F 5/00, C07F 9/00

(54) **Verfahren zur Herstellung von Metallkomplexen mit hoher Koordinationszahl und deren Verwendung**

Process for the preparation of metal complexes with high coordination number and their use

Procédé de préparation de complexes métalliques avec un nombre de coordination grand et leur application

(84) Benannte Vertragsstaaten:
AT BE CH DE ES FR GB IT LI NL SE

(30) Priorität: 22.09.1992 DE 4231680

(43) Veröffentlichungstag der Anmeldung:
30.03.1994 Patentblatt 1994/13

(73) Patentinhaber: Bakelite AG
58642 Iserlohn-Letmathe (DE)

(72) Erfinder:
• Böttcher, Axel, Dr.
D-46483 Wesel (DE)
• Döring, Manfred, Dr.
D-07749 Jena (DE)
• Zehrfeld, Jürgen, Dr.
D-46562 Voerde (DE)

(56) Entgegenhaltungen:
US-A- 4 105 667

• JOURNAL OF THE CHEMICAL SOCIETY, SECTION A 1968 Seiten 128 - 132 EILBECK, W.J. ET AL. 'COBALT(II), NICKEL(II), AND COPPER(II) COMPLEXES OF 2-METHYLIMIDAZOLE'
• JOURNAL OF THE CHEMICAL SOCIETY, SECTION A 1967 Seiten 757 - 761 EILBECK, W.J. ET AL. 'COBALT(II), NICKEL(II), AND COPPER(II) COMPLEXES OF IMIDAZOLE AND THIAZOLE'
• INORGANIC CHEMISTRY Bd. 7, Nr. 11 , 1968 Seiten 2447 - 2451 GOODGAME, D.M.L. ET AL. 'LOW-ENERGY VIBRATIONAL SPECTRA OF SOME IMIDAZOLE COMPLEXES'
• CHEMICAL ABSTRACTS, vol. 81, no. 20, 1974, Columbus, Ohio, US; abstract no. 121190t, SHIRAI, H. ET AL. 'VINYL POLYMERIZATION BY METAL COMPLEXES. XV. POLYMERIZATION OF ACRYLONITRILE INITIATED BY IMIDAZOLE-COPPER(II)' Seite 11 ;
• JOURNAL OF THE CHEMICAL SOCIETY, SECTION A 1967 Seiten 757 - 761 EILBECK, W.J.
• ET AL. 'COBALT(II), NICKEL(II), AND COPPER(II) COMPLEXES OF IMIDAZOLE AND THIAZOLE'

**Beschreibung**

Die Erfindung betrifft ein neues, sowohl kontinuierlich als auch batchweise durchführbares Verfahren zur Herstellung von Komplexverbindungen mit zusätzlichen, als Basen wirkenden Liganden, sowie deren Verwendung als gezielt einsetzbare, latente Polymerisationskatalysatoren.

Aus der Literatur ist eine Vielzahl verschiedener, metallorganischer Komplexverbindungen bekannt, die als Katalysatoren, Beschleuniger, Initiatoren und ähnliches für organische Reaktionen eingesetzt werden.

In neuerer Zeit haben Chelatkomplexe der Übergangsmetalle mit Diketonen, Dithiocarbamidsäurederivaten, Dihydroxyverbindungen, Diaminen oder anderen difunktionellen Liganden besonders an Bedeutung als Katalysatoren für Polymerisations- und Härtungsreaktionen gewonnen.

Die Herstellung solcher einfachen, neutralen Übergangskomplexe ist beispielsweise in den Patentschriften US-A 4 337 210, US-A 4 338 254, US-A 4 008 260 oder US-A 4 279 829 beschrieben.

Übergangsneutralkomplexe, in denen Liganden unterschiedlicher Natur um ein Zentralatom koordiniert sind, lassen sich bisher in aufwendigen Verfahren herstellen, wobei in einem ersten Schritt hergestellte, wasserfreie, lösungsmittelfreie Übergangsmetallkomplexe im zweiten Verfahrensschritt mit zusätzlichen Liganden, wie z. B. Pyridin, Butylamin oder Benzylamin, koordiniert werden (Olszewski, E. J; Martin, D. F.; J. Inorg. Nucl. Chem. <u>27</u>, 1043-1048 (1965).

Zwar wurden auch Verfahren beschrieben, durch die solche gemischt koordinierten Komplexe in einem einstufigen Verfahren hergestellt werden können, jedoch werden zur Durchführung teure Übergangsmetallacetate benötigt. Außerdem werden sehr schwankende Ausbeuten zwischen 20 und 88 % erzielt, so daß die Durchführung im technischen Maßstab sich als unwirtschaftlich erweist (Bereman, R. D. et.al. Inorg. Chim. Acta <u>130</u>, 195-201 (1987).

Bekannt ist auch ein einstufiges Verfahren aus der Schrift DD-A5-292 463. Jedoch muß bei diesem Verfahren in teuren organischen Lösungsmitteln oder -gemischen in Gegenwart von Hilfsbasen, wie z. B. Tributylamin oder anderen tertiären Aminen, gearbeitet werden.

Bei diesem Verfahren wirkt sich das Lösungsverhalten der gebildeten Komplexe nachteilig aus. Da die erhaltenen Neutralkomplexe zum Teil in den eingesetzten Lösungsmitteln löslich sind, müssen Ausbeuteeinbußen in Kauf genommen werden, die nicht durch Einengen wettgemacht werden können. Außerdem müssen die anfallenden Mengen an verunreinigten Lösungsmittel entsorgt oder teuer wiederaufgearbeitet werden. Das gleiche gilt für die als Nebenprodukt entstehenden organische Ammoniumsalze.

Ein Nachteil dieses Verfahrens ist es auch, daß gerade diese, teils geruchsintensiven Ammoniumsalze in geringen Mengen dem Endprodukt anhaften und eine zusätzliche Reinigung erforderlich machen.

Aber nicht nur die Herstellung bisher bekannter metallorganischer Komplexverbindungen ist mit Mängeln behaftet, auch bei ihrer Verwendung als Polymerisations- oder Härtungskatalysatoren zur Herstellung hochwertiger Produkte, treten Probleme auf, die bisher nur durch die Zugabe weiterer Additive oder durch eine aufwendige, zeitintensive Temperatur- und Druckführung halbwegs gelöst werden können.

Werden beispielsweise die aus US 4 487 914 bekannten Addukte, bestehend aus Imidazol oder aus substituierten Imidazolen, einer Epoxidverbindung und einem Metallsalz, als Härtungskatalysator für Epoxidharze verwendet, treten während der Aushärtungsreaktion außerordentlich starke Temperaturerhöhungen auf, die zu Verfärbungen des Produkts und zu Inhomogenitäten im ausgehärteten Material führen.

Der Zusatz von Lösungsmitteln zur Herabsetzung der hohen Reaktivität nach dem Anspringen der Polymerisationsreaktion, wie es in DE-OS 28 10 428 beschrieben ist, führt ebenfalls zu keiner befriedigenden Lösung, da die spätere Entfernung zusätzliche Verarbeitungsschritte erforderlich macht und die ausgehärteten Produkte unerwünschte Hohlräume aufweisen, die die Wasseraufnahmefähigkeit steigern, die Chemikalienbeständigkeit beeinträchtigen und die elektrischen und mechanischen Eigenschaften des Polymers signifikant verschlechtern.

Während die aus den Patentschriften US 3 638 007, US 3 792 016, US 4 101 514 und DE 23 00 489 bekannten Imidazol-Metall-Komplexe als latente Härter erst bei Temperaturen höher als 170 °C wirksam werden und Imidazol abspalten, und damit durch unerwünschte Nebenreaktionen verminderte Produktqualitäten bedingen, ist es möglich, mit den aus PCT/WO 91/00419 bekannten, neutralen Metallkomplexen Polymergemische herzustellen, die bei Raumtemperatur stabil und lagerfähig sind, jedoch bereits bei Temperaturen höher 50 °C zu hochwertigen Produkten aushärten. Nachteil dieser Katalysatoren ist jedoch, daß nach dem Anspringen der Reaktion direkt eine völlige Aushärtung erfolgt. Eine stufenweise Aushärtung, die es beispielsweise erlaubt, lagerfähige Prepregs unter Verwendung nur eines einzelnen Härtungssystems herzustellen, ist nicht möglich.

Aufgabe der Erfindung ist es daher, ein einfach durchzuführendes umweltfreundliches Verfahren zur Verfügung zu stellen, das es ermöglicht, aus preiswerten Metallsalzen in einer einstufigen Reaktion Übergangsmetallkomplexe mit zusätzlich koordinierten Liganden in nahezu quantitativen Ausbeuten und hoher Reinheit herzustellen, so daß aufwendige Reinigungs- und Trocknungsverfahren entfallen können.

Aufgabe der Erfindung ist es weiterhin einen Härtungskatalysator zur Verfügung zu stellen, durch den latent härtende Polymergemische hergestellt werden können, die bei Raumtemperatur lagerstabil sind, bei geringfügig erhöhten Temperaturen teilweise aushärten, so daß in einfacher Weise vorgehärtete Vorprodukte hergestellt werden können, die erst nach ihrer endgültigen Formgebung bei erhöhten Temperaturen aushärten.

Die Lösung der Aufgabe erfolgt durch ein neues, sowohl kontinuierlich als auch batchweise durchführbares Verfahren gemäß der Ansprüche 1 bis 9, wodurch neutrale Komplexe hergestellt werden können, die als einzige Härtungskatalysatoren für lagerstabile Prepregs gemäß Anspruch 10, für Epoxyharze und deren Gemische gemäß Anspruch 13 und zur Herstellung knet- und formbarer, vorgehärteter Epoxydharze gemäß Anspruch 11, für Klebemassen gemäß Anspruch 12, sowie für Polyurethane und deren Gemische mit anderen Harzen gemäß Anspruch 14.

Es wurde nun gefunden, daß als Lewis-Basen wirkende organische Verbindungen in der ersten und zweiten Koordinationssphäre als Liganden um ein Zentralmetallatom in hoher Zahl gebunden werden können, wenn sie gemeinsam mit einem geeigneten Metallsalz oder -komplex lösungsmittelfrei unter intensiver Durchmischung erhitzt werden, und zwar mindestens bis zur Schmelztemperatur des Liganden und darüber hinaus.

Sind die Lewis-Basen Flüssigkeiten kann bei Raumtemperatur gearbeitet werden, d. h., das Metallsalz muß nicht geschmolzen werden. Insgesamt kann die Zusammensetzung der entstehenden Komplexe allein durch das stöchiometrische Verhältnis der eingesetzten Komponenten bestimmt werden.

Wie Untersuchungen zeigten, können in Abhängigkeit von der eingestellten Temperatur in der Schmelze und den eingesetzten Mengen an Lewis-Base und Metallsalz, bzw. -komplex neue Komplexe mit mehr als acht Liganden erhalten werden. Die koordinierten Liganden eines solchen neuen Komplexes können alle gleich sein. Es können auf diese Weise aber auch gemischt koordinierte Komplexe erhalten werden. Identische Edukte führen dabei unter gleichen Reaktionsbedingungen nahezu quantitativ und reproduzierbar zu gleichen Endprodukten.

Ohne weitere Aufarbeitung können die so erhaltenen Komplexe überraschenderweise als einzige Härtungskatalysatoren für Polymergemische zur Herstellung von vorgehärteten Produkten verwendet werden, wobei sowohl die Vorhärtung bei niedriger Temperatur als auch die Nachhärtung nach erfolgter Formgebung durch diesen Katalysator hervorgerufen wird.

Während üblicherweise die Ausfällung der Komplexsalze erst nach einer gewissen Wartezeit erfolgt, können die so gebildeten Komplexe direkt aus dem Reaktionsgemisch als feinteiliges Pulver erhalten werden. Dieses wird beispielsweise durch sehr langsames Abkühlen bei hoher Rührgeschwindigkeit, durch Vermahlen des abgekühlten Reaktionsprodukts, durch Versprühen oder durch andere Zerkleinerungsmethoden erzielt.

Eventuell als Nebenprodukt freigesetzte, noch anhaftende Säure, läßt sich, falls sie bei der Weiterverwendung stört, in einfacher Weise durch Waschen mit einem geeigneten Lösungsmittel, in dem der Komplex unlöslich ist, entfernen. Aufgrund des einfachen Syntheseweges lassen sich die Komplexe sowohl batchweise als auch kontinuierlich gewinnen.

Dieses Verfahren weist als besonderen Vorteil auf, daß reproduzierbare einheitliche, geruchlose Komplexe mit zusätzlich koordinierten Liganden in hohen Ausbeuten erhalten werden, die sich bei Verwendung als Härtungsbeschleuniger auch nach längerer Lagerzeit leicht dosieren, gleichmäßig im Harz verteilen und lösen lassen, während bisher unter Verwendung aminischer Hilfsbasen hergestellte Komplexe als unangenehm riechende, zum Verbacken neigende Produkte erhalten werden, die durch ebenfalls gebildete Aminkomplexe verunreinigt sind und sich nach längerer Lagerzeit schlecht dosieren lassen. Da die Komplexe zudem noch ohne Zusatz von Lösungsmitteln hergestellt werden, gestaltet sich das gesamte Herstellungsverfahren umweltfreundlicher und zugleich wirtschaftlicher als bisher bekannte Verfahren; und zwar sinken die Gesamtkosten nicht nur um den Lösungsmittelpreis sondern auch um die des Lösungsmittelrecyclings, den einfacheren Reaktoraufbau und um Kosten die normalerweise für besondere Sicherheitsvorkehrungen in Gegenwart siedender Lösungsmittel getroffen werden müssen.

Desweiteren lassen sich die Komplexe in erheblich kürzeren Reaktionszeiten herstellen, was mit einer zusätzlichen Energieeinsparung verbunden ist.

Die erfindungsgemäßen, evtl. gemischt koordinierten Metallkomplexe lassen sich gemäß der folgenden, allgemein formulierten, einstufigen Reaktionen herstellen, wobei die Reaktanden in stöchiometrischen Mengen eingesetzt werden:

$$M_m^{a+}(SR^{b-})_n + xL \cdot cH + yB \rightarrow$$

$$m\,[M^{a+}(SR^{b-})_{(n-o)}L_xB_y] + o \cdot SR^{b-} + c \cdot H^+ \qquad\qquad I$$

mit

- M ein Metallion,
- SR ein Säurerest einer organischen oder anorganischen Säure,
- B eine Lewis-Base und
- L ein Chelatligand

$$m \cdot a = b \cdot (n\text{-}o) + c \cdot x,$$

wobei

a = eine natürliche Zahl im Bereich von 1 - 8,
b = eine natürliche Zahl im Bereich von 1 - 3,
c = eine natürliche Zahl im Bereich von 0 - 4,
m = eine natürliche Zahl im Bereich von 1 - 3,
n = eine natürliche Zahl im Bereich von 1 - 8,
o = eine natürliche Zahl im Bereich von 0 - 8,
x = eine natürliche Zahl im Bereich von 0 - 4,
y = eine natürliche Zahl im Bereich von 1 - 15,

bevorzugt 9 -12, bedeuten und

$$(n\text{-}o) + x + y \leq 16$$

sind,
oder:

$$M_m{}^{a+}(SR^{b-})_n L'_p B'_q + xL \cdot cH + y\,B \rightarrow$$

$$m\,[M^{a+}(SR^{b-})_{(n\text{-}o)} L'_p B'_q L_x B_y] + oSR^{b-} + cH^+ \qquad\qquad II$$

mit M, SR, B, L, a, b, c, m, n, o, x und y wie oben sind und,

$$m \cdot a = (n\text{-}o) \cdot b + p + x \cdot c$$

- B' eine Lewis-Base, evtl. identisch mit B
- L' ein Chelatligand, evtl. identisch mit L

  p = eine natürliche Zahl im Bereich von 0 - 4
  q = eine natürliche Zahl im Bereich von 0 - 8 sind,

wobei$(n\text{-}o) + p + q + x + y \leq 16$ ist.

Als Liganden können ungeladene, einfache Lewis-Basen mit einem freien Elektronenpaar, mehrzähnige Chelatbildner, d. h., Verbindungen, die mehr als eine Koordinationsstelle am Zentralatom besetzen können, dienen. Zu koordinierende Liganden können identisch, bereits gebunden oder verschieden sein, und im Gemisch im Reaktionsgemisch vorgelegt werden.

Als Metallion ($M^{a+}$) kann im Prinzip jedes komplexbildende Metallion dienen, insbesondere aber die Ionen der 2. und 3. Hauptgruppe des Periodensystems der Elemente sowie die Metallionen der Nebengruppenelemente.

Bevorzugte Metallionen sind Kobalt- Nickel-, Eisen-, Zink- oder Manganionen, die in Form von preiswerten Metallsalzen zur Herstellung der erfindungsgemäßen Komplexe eingesetzt werden.

Beispiele für einsetzbare Metallsalze sind Kupfersalze wie Kupferchlorid, Kupferbromid, Kupferfluorid, Kupfernitrat, Kupferfluorborat, Kupfersulfat, Kupferacetat, Kupfertriflouracetat, Kupferstearat, Kupferoctoat, Kupfermethacrylat, Kupfermalonat, Kupferbenzoat; Nickelsalze, wie Nickelchlorid, Nickelfluorid, Nickelsulfat, Nickelfluorborat, Nickeltallat, Nickelstearat oder Nickelsalze anderer organischer Säuren, wie z. B. der Ricinolsäure; Kalziumsalze, wie Kalziumchlorid, Kalziumbromid; Kobaltsalze wie Kobaltchlorid, Kobaltfluorid, Kobaltnitrat, Kobaltsulfat, Kobaltoctoat, Kobaltfluorborat, Kobaltstearat; Zinksalze wie Zinkbromid, Zinkchromat, Zinkchlorid, Zinkstearat, Zinkoctoat, Zinkethylhexoat; Quecksilbersalze wie Quecksilberbromid oder -chlorid, Zirkoniumsalze wie Zirkoniumsulfat oder Zirkoniumchlorid; Indiumsalze wie Indiumfluorborat; Silbersalze wie Silbernitrat; Chromsalze wie Chromchlorid; Mangansalze wie Manganchlorid, Mangansulfat; Zinnsalze wie Zinnchlorid, Cadmiumsalze wie Cadmiumchlorid, Eisensalze wie Eisenchlorid, Titansalze wie Titanchloride; Vanadiumsalze wie Vanadiumchlorid, Antimonsalze wie Antimonchlorid und ähnliche.

Selbstverständlich sind die aufgezählten Salze nur ein kleiner Teil der im Verfahren einsetzbaren Metallsalze. Bevorzugt werden preiswerte, anorganische Salze zur Herstellung der erfindungsgemäßen Härtungskatalysatoren verwendet.

Gut geeignet sind jedoch auch alle Salze organischer Säuren, die einen pK-Wert von etwa 1,2 bis 5,7 (bezogen auf eine 0,1 N Lösung) aufweisen, und zwar z. B. die der Essigsäure, Oxalsäure, Milchsäure, Weinsäure, Apfelsäure, Fumarsäure, Malonsäure oder anderer geeigneter organischer Säuren. Dementsprechend kommen als Säurereste (SR) alle oben beschriebenen Salze in Betracht.

Als Chelatliganden L, bzw. L' können im Prinzip alle organischen Verbindungen eingesetzt werden, die mindestens zwei Atomgruppierungen mit freien Elektronenpaaren oder Elektronenlücken zur Bildung von Komplexbindungen besitzen. Beispiele hierfür sind Dioxime, alpha- und β-Hydroxycarbonylverbindungen, also Hydroxycarbonsäuren, -ketone, -aldehyde und deren Analoge oder enolisierbare 1,3-Diketone.

Bevorzugte Chelatliganden sind Acetylaceton, Benzoylaceton und deren Homologe, Dipivaloylmethan oder Dimethylglyoxim.

In den erfahrungsgemäßen Metallkomplexverbindungen können Lewis-Basen B, bzw. B' alle nucleophilen Moleküle oder Ionen sein, die ein einsames Elektronenpaar aufweisen. Beispiele dafür sind Pyridin-, Pyrimidin - oder Imidazolverbindungen, Ether, einschließlich cyclischer Ether, wie z. B. Tetrahydrofuran, aliphatische und aromatische Alkohole, Ketone, Thioether oder Merkaptane.

Lewis-Basen können in den Komplexen gemäß der Formeln I und II aber auch CH-acide Verbindungen sein, die als Lewis-Basen vorliegen, d. h., CH-acide Verbindungen, bei denen ein Proton abgespalten ist. Beispiele für derartige CH-acide Lewis-Basen sind CH-acide Pyridine, Malonsäurediester oder -dinitril, Acetessigsäureester, Cyanessigsäureester oder Nitromethan.

Der Ladungsausgleich der Metallkationen der Metallkomplexverbindungen kann sowohl durch die Liganden selbst, als auch durch ionische Lewis-Basen erfolgen. Dabei versteht es sich, daß sich die Zahl der ladungstragenden Liganden reduziert, wenn der Komplex ionische Lewis-Basen enthält.

Eine weitere Ausgestaltung der erfindungsgemäß hergestellten Komplexe besteht darin, daß die CH-aciden Lewis-Basen über Stickstoff- und/oder Sauerstoff- und/oder Schwefel- und/oder Phosphor-Atome, bzw. Wasserstoffbrücken an die Metallchelat-Verbindung gebunden sind.

Zur Durchführung der Reaktion werden die Ausgangsverbindungen im stöchiometrischen Verhältnis, bezogen auf das gewünschte Endprodukt, eingewogen, intensiv miteinander vermischt und auf die Reaktionstemperatur erwärmt. Abhängig vom Aggregatzustand der eingesetzten Verbindungen erfolgt die Reaktion bei Temperaturen von 20 bis 200 °C, vorzugsweise 25 bis 150 °C, d. h. liegen die zu koordinierenden Liganden, seien es nun die Lewis-Basen oder Chelatliganden, in flüssiger Form vor, ist die Reaktionstemperatur niedriger als bei einem Gemisch fester Reaktionspartner. In jedem Fall muß jedoch unter intensiver Durchmischung so weit erwärmt werden, bis eine homogene Schmelze vorliegt. Anschließend werden die Reaktionsbedingungen so lange konstant gehalten, bis das gesamte Metallsalz reagiert hat, und der neue Komplex gebildet ist. Das Ende der Reaktion ist an der Änderung der Farbe zu erkennen, läßt sich aber auch anhand der Reaktivität durch Ermittlung der B-Zeit in der Reaktion mit einem Basisepoxidharz ermitteln.

Möglich ist es aber auch, das Ende analytisch durch z. B. Metallwertbestimmung, Messung der UV-vis Absorption zu bestimmen. Diese Methoden sind jedoch aufwendig und werden daher als nicht produktionsnah angesehen. Das Reaktionsprodukt wird ohne weitere Aufarbeitung als feinteiliges Pulver erhalten, indem bei hoher Rührgeschwindigkeit sehr langsam abgekühlt wird, das abgekühlte Produkt fein vermahlen wird, nach Beenden der Reaktion versprüht oder einer anderen Zerkleinerungsmethode unterzogen wird.

Soll der erhaltene Komplex zur Härtung von Harzen eingesetzt werden, die empfindlich auf eventuell anhaftende Einsatzverbindungen oder gebildete Nebenprodukte, wie z. B. organische oder anorganische Säuren, reagieren, läßt er sich in einfacher Weise mit Lösungsmitteln waschen. Für diesen Zweck geeignete Lösungsmittel sind solche in denen die Komplexe selbst unlöslich sind, wie z. B. Wasser, durch das evtl. nicht umgesetztes Metallsalz entfernt wird, Alkohole, wie Ethanol, Methanol, Propanol oder auch Dimethylformamid oder andere organische Lösungsmittel, durch die evtl. überschüssiger Ligand ausgewaschen wird.

Als mögliche Reaktionsgefäße mit entsprechenden Einbauten zur intensiven Durchmischung können sowohl kontinuierlich betriebene Rohrreaktoren verschiedener Ausführung, denen im einfachsten Fall kleine Mischkammern vorgeschaltet sein können, als auch Schlaufenreaktoren mit Zwangsumlauf oder einfache Rührreaktoren, mit oder ohne Einbauten, evtl. in Kaskade, dienen.

Besonderer Vorteil dieses kontinuierlich durchführbaren Verfahrens ist die Möglichkeit, ein Produkt erhalten zu können, das ohne weitere Aufarbeitung als Polymerisations- oder Härtungskatalysator einsetzbar ist. Es handelt sich dabei um ein feinteiliges, rieselfähiges Produkt, das auch nach längerer Lagerzeit nicht zum Verbacken neigt.

Sollen Komplexe mit besonders hoher Koordinationszahl hergestellt werden, ist es möglich, nach einer ersten Reaktionszeit, innerhalb der alle vorgelegten Reaktionspartner ausreagiert sind, weiteren Chelatliganden oder weitere Lewis-Basen zuzuspeisen und die Reaktionsmasse erneut unter guter Durchmischung und Erwärmung reagieren zu lassen. Auf diese Weise kann die Koordinationszahl weiter erhöht, d. h., eine weitere Koordinationssphäre besetzt werden, in der üblicherweise in hydrathaltigen Kristallen Wassermoleküle gebunden sind.

Besonders vorteilhaft läßt sich dieses in einem Rohreaktor mit mehrfachen Zuspeisungsmöglichkeiten durchführen.

Hergestellt werden können durch das beschriebene Verfahren unter anderem folgende Komplexe:

- Hexa(imidazol)-cobalt(II)acetat
- Undeca(imidazol)-cobalt(II)sulfat
- Tetrakis(1-methylimidazol)nickel(II)bromid
- Deka(imidazol)-nickel(II)chlorid
- Hexa(imidazol)-magnesiumbromid
- Bis(acetylacetonato)zink(II)dipyridin
- Bis(dipivaloylmethanato)-eisen(II)diimidazol)
- Bis(octoat)-zink(II)di(1-methylimidazol)

So hergestellte Komplexe lassen sich aufgrund ihrer feinteiligen Beschaffenheit besonders gut in den auszuhärtenden Polymergemischen auf der Basis von Epoxidharzen oder Polyurethanharzen lösen und führen nach dem Anspringen der Härtungsreaktion zu besonders kurzen Härtungszeiten. Dabei erfolgt die Aushärtung der Harze bei Temperaturen zwischen 50 und 180 °C, insbesondere zwischen 60 und 140 °C.

Aushärtungsversuche mit Komplexsalzen, die eine besonders hohe Koordinationszahl aufweisen, bzw. mit solchen, bei denen die Lewis-Basen in einer zweiten Koordinationssphäre gebunden sind, zeigten zwei Aushärtungsstufen, und zwar insbesondere dann, wenn niedrige Komplexkonzentrationen verwendet werden.

Dieses ist von besonderem Vorteil, da auf diese Weise Harzsysteme zur Herstellung von vorgehärteten Produkten zur Verfügung gestellt werden können, deren Vor- und Nachhärtung durch nur einen einzigen Härtungskatalysator hervorgerufen werden kann. Außerdem wird durch diese Möglichkeit eine Wechselwirkung zwischen den bisher verwendeten Katalysatorsystemen zur Vor- und Nachhärtung vermieden, so daß gerade aus diesem Grund die neuen Komplexverbindungen in niedrigen Konzentrationen als Katalysator für beide Härtungsstufen vorgehärteter Produkte wirksam sind.

Die erfindungsgemäßen Komplexsalze können in Konzentrationen von 0,01 bis 50 Gew.-%, insbesondere 0,1 bis 20 Gew.-% bezogen auf das gesamte Harzgemisch, sowohl zur Härtung von Epoxidharzprodukten als auch von Polyurethanen verwendet werden.

Ausgehärtet werden können durch die erfindungsgemäßen Katalysatoren alle Epoxidverbindungen mit mehr als einer Epoxidgruppe.

Bevorzugte Epoxidverbindungen sind Polyphenol-Glycidylether, z. B. epoxidierte Novolake oder die Reaktionsprodukte aus Epichlorhydrin und Bisphenol A oder Bisphenol F. Derartige Epoxidharze haben ein Epoxid-Äquivalent von 160 bis 500. Die vorstehenden polyfunktionellen Epoxidverbindungen (dieser Ausdruck schließt auch den Begriff Epoxidharz ein) können einzeln oder im Gemisch, ggf. in Gegenwart von Lösungsmitteln vor- und nachgehärtet oder direkt ausgehärtet werden. Sie können auch im Gemisch mit Monoepoxyden (sogenannten Reaktivverdünnern) eingesetzt werden. Geeignete Epoxide sind auch glycidylierte Aniline, wie z. B. Diglycidylanilin oder 4,4,4',4'-Tetraglycidyldiaminodiphenylmethan.

In der beschriebenen Weise sind die erfindungsgemäßen Katalysatoren auch als Härter für alle zu Polyurethanen vernetzenden Gemische, die Monomere, Oligomere oder Präpolymere mit freien Isocyanatgruppen enthalten, geeignet.

Entsprechende Gemische sind aus dem Kunststoff Handbuch Bd. 7, Polyurethane, Becker, G. W.; Braun, D.; Hrsg. Dr. Günter Oertel, Carl Hanser Verlag, 1983, bekannt. Zu diesen Gemischen zählen auch Mischungen mit anderen Polymeren, wie z. B. Polycarbonate, Polyacrylate, ungesättigte Polyesterharze, insbesondere jedoch mit Polyepoxiden.

Je nach Wahl der verwendeten erfindungsgemäßen Härtungskatalysatoren, werden nach der Zugabe des Katalysators lagerstabile oder bei niedrigen Temperaturen vorhärtende Harze erhalten, die bei erhöhten Temperaturen zwischen 80 bis 200 °C, insbesondere 100 bis 150 °C nach erfolgter Formgebung aushärten, im vorgehärteten Zustand jedoch leicht knet- und formbar sind und über längere Zeit gelagert werden können.

Dieses Härtungsverhalten kann ausgenutzt werden, um klebfreie, über längere Zeit lagerstabile Prepregs herzustellen, die nach der endgültigen Aushärtung besonders hohe Produktqualitäten aufweisen, da mit den erfindungsgemäßen Härtungskatalysatoren lösungsmittelfrei gearbeitet werden kann. Außerdem lassen sich die Härtungskatalysatoren sehr leicht, gleichmäßig mit den Harzgemischen vermischen.

Die folgenden gegebenen Beispiele dienen zur Verdeutlichung des erfindungsgemäßen Verfahrens und die dadurch herstellbaren Komplexe, jedoch sollen sie sie nicht auf diese beschränken.

**BEISPIELE:**

Beispiel 1

In einem Rührkessel werden 1 mol Nickel(II)chlorid mit 10 mol Imidazol auf Schmelztemperatur erhitzt und dabei intensiv mit 200 bis 400 upm gerührt. Die Reaktion ist nach maximal 5 min. beendet. Die Ausbeute an Deca(imidazol)-nickel(II)chlorid beträgt 98,5 %, bezogen auf das eingesetzte Metallsalz.

| Elementaranalysendaten: | theoretisch [%] | ermittelt [%] |
|---|---|---|
| Ni | 7,3 | 7,3 |
| C | 44,4 | 44,0 |
| H | 4,9 | 4,9 |
| N | 34,7 | 34,8 |
| Cl | 8,8 | 8,9 |

Beispiel 2

In einem Rührkessel werden 1 mol Kupfersulfat und 4 mol 2-Methylimidazol bei starkem Rühren, wie in Beispiel 1 innig gemischt. Nach maximal 5 bis 10 min. ist der Komplex Tetra(2-methylimidazol)-kupfer(II)sulfat in einer Ausbeute von 97,5 % hergestellt.

| Elementaranalysendaten | theoretisch [%] | ermittelt [%] |
|---|---|---|
| Cu | 13,0 | 13,0 |
| C | 39,4 | 39,8 |
| H | 4,9 | 5,0 |
| N | 23,0 | 22,9 |
| S | 6,6 | 6,4 |

Beispiel 3

In einem Rohrreaktor werden ein inniges Gemisch aus 1 mol Eisen(II)chlorid und 6 mol 1-Methylimidazol eingebracht. Nach einer kurzen Verweildauer, wobei die Raumtemperatur gearbeitet werden kann, ist der Komplex Hexy (1-methylimidazol)-eisen(II)chlorid in einer Ausbeute von 99 %, bezogen auf das eingesetzte Metallsalz, entstanden.

| Elementaranalysendaten: | theoretisch [%] | ermittelt [%] |
|---|---|---|
| Fe | 9,0 | 9,0 |
| C | 46,8 | 46,8 |
| H | 5,2 | 5,5 |
| N | 27,1 | 27,2 |
| Cl | 11,5 | 11,5 |

Beispiel 4

In einem Rührkessel werden 1 mol Nickel(II)acetat und 6 mol Imidazol eingebracht und auf 100 °C erwärmt. Unter starkem Rühren bei 200 bis 400 upm ist das Hexa(imidazol)-nickel(II)acetat innerhalb 5 bis 10 min. in einer Ausbeute von 97,5 % gebildet.

| Elementaranalysendaten: | theoretisch [%] | ermittelt [%] |
|---|---|---|
| Ni | 10,1 | 10,0 |
| C | 45,1 | 45,5 |
| H | 5,1 | 5,0 |
| N | 28,7 | 28,5 |

Beispiel 5

In einem Rohrreaktor wird ein inniges Gemisch, bestehend aus 1 mol Cobalt(II)sulfat und 11 mol Imidazol eingebracht und auf etwa 100 °C erhitzt. Der Komplex Undeca(imidazol)cobalt(II)sulfat bildet sich quantitativ nach 15 bis 20 min. Reaktionszeit im geschmolzenem Imidazol.

| Elementaranalysendaten: | theoretisch [%] | ermittelt [%] |
|---|---|---|
| Co | 6,5 | 6,5 |
| C | 43,9 | 48,5 |
| H | 4,9 | 5,0 |
| N | 34,1 | 34,0 |
| S | 3,5 | 3,3 |

Beispiel 6

In einem Rührkessel werden 1 mol Nickel(II)chloridhexahydrat, 2 mol Acetylaceton und 4 mol Pyridin innig gemischt. Nach einer Reaktionszeit von 5 bis 10 min. ist das Bis(acetylacetonato)-nickel(II)dipyridin in einer Ausbeute von 96 % entstanden. Das gebildete Pyridiniumchlorid wird durch eine Wäsche mit Wasser von dem Komplex in einem der Reaktion nachgeschalteten Prozeß abgetrennt.

| Elementaranalysendaten: | theoretisch [%] | ermittelt [%] |
|---|---|---|
| Ni | 14,2 | 14,1 |
| C | 57,8 | 57,5 |
| H | 5,8 | 6,1 |
| N | 6,7 | 6,8 |

Beispiel 7

1 mol Cobalt(II)carbonat werden mit 2 mol Salicylaldehyd in einem Überschuß an 1-Methylimidazol in mäßiger Wärme, wie im Beispiel 1 innig gemischt. Die Ausbeute an Bis(salicylaldehylato)-cobalt(II)di-(1-methylimidazol) beträgt 97 %.

| Elementaranalysendaten: | theoretisch [%] | ermittelt [%] |
|---|---|---|
| Co | 12,7 | 12,5 |
| C | 56,8 | 56,5 |
| H | 4,7 | 4,8 |
| N | 12,0 | 12,3 |

Beispiel 8

Die Herstellung von Prepregmaterial erfolgt nach den bekannten Verfahren der Naßtechnologie oder dem hot-melt-Verfahren.

Der Katalysator wird innig im Diglycidether des Bisphenol-A (Rütapox 0164) eingebracht. Wird in der Naßtechnologie diese Mischung verarbeitet ist das eingesetzte Lösungsmittel Methylethyketon. Der harzgehalt des Prepregs beträgt nach beiden Verarbeitungsverfahren 50 Masse-%, der Harzfluß 30 Masse-%.

Die Prepreglagerfähigkeit ist bei Raumtemperatur im Vergleich zur reinen Lewis-Base dargestellt: (Lagerfähigkeit ist nicht mehr gegeben, wenn der Harzfluß < 10 Masse-% beträgt.)

|  | Katalysator nach Beispiel 1 | Imidazol | Vergleichsvers.Hexa(imidazol)-Ni(II)chlorid |
|---|---|---|---|
| Naßtechnologie | 45 Tage | 2 Tage | 6 Tage |
| hot-melt | 43 Tage | 1 Stunde | 6 Tage |
|  | Katalysator nach Beispiel 2 | 2-Methylimidazol |  |
| Naßtechnologie | 54 Tage | 4 Tage |  |
| hot-melt | 52 Tage | 3,5 Stunden |  |
|  | Beispiel 3 | 1-Methylimidazol |  |
| Naßtechnologie | 62 Tage | 5 Tage |  |
| hot-melt | 59 Tage | 5 Stunden |  |

Beispiel 9

In einem Rührkessel werden 1 mol Quecksilber-(II)chlorid und 2 mol 1-Methylimidazol eingebracht und auf 100 °C erwärmt. Unter starkem Rühren bei 200 bis 400 upm ist das Di-(1-Methylimidazol)-quecksilber(II)chlorid innerhalb 5 bis 10 min. in einer Ausbeute von 97,5 % gebildet.

Beispiel 10

In einem Rührkessel werden 1 mol Aluminium(III)-chlorid und 3 mol 1-Methylimidazol eingebracht und auf 100 °C erwärmt. Unter starkem Rühren bei 200 bis 400 upm ist das Di-(1-Methylimidazol)-aluminium(III)chlorid innerhalb 5 bis 10 min. in einer Ausbeute von 97 % gebildet.

Beispiel 11

In einem Rührkessel werden 1 mol Niob(III)-chlorid und 3 mol 1-Methylimidazol eingebracht und auf 100 °C erwärmt. Unter starkem Rühren bei 200 bis 400 upm ist das Tri-(1-Methylimidazol)-niob(III)chlorid innerhalb 5 bis 10 min. in einer Ausbeute von 98 % gebildet.

Die Komplexe der Beispiele 9 bis 11 werden durch die beiliegenden IR-Spektren charakterisiert. Ihre Eignung in der katalytischen Härtung wird mittels Differential-Scanning-Calorimetrie (DSC) nachgewiesen. Dazu wird der Katalysator in einem Basisharz (Rütapox 0164LV) im Molverhältnis 1 : 0,05 eingearbeitet und zunächst mit dynamischer DSC vermessen. Um die hohe Reaktivität darzustellen (kurze Reaktionszeit), wird bei der Peakmaximumtemperatur in einer erneuten Messung isotherm gehärtet.

Die entsprechenden dynamischen und isothermen DSC-Diagramme sind diesen Beispielen beigefügt.

AlCl₃ (1-methyl)₃

= 0164/LV+Al C13 (1-MI)₃     (KAT36)

MV = 1: 0.05mol

Peak from: 96.95
    .to: 204.54
Onset= 121.48
J/g =-533.03

Peak= 144.52

HEAT FLOW (mW)

Temperature (C)

30

22.5

15

7.5

0

50.00   70.00   90.00   110.00   130.00   150.00   170.00   190.00   210.00

Date: May 05, 1993 10:27am
Scanning Rate: 10.0 C/min
Sample Wt: 6.417 mg   Path: j:\kurve\ds
*File 1: KAT36     HAU*

55   50   45   40   35   30   25   20   15   10   5

= 164/LV+Al Cl3[1-MI]₃ · (KAT36)

MV = 1:0.05mol

isoth.bei 145C

Peak from: .12
to: 6.39
Onset: .15
J/g: -509.74

Heat Flow (mW)

Peak: 1.11

50
40
30
20
10
0

1.00   2.00   3.00   4.00   5.00   6.00   7.00

Time (min)

Date: May 06, 1993   4:34pm
T Final Time:   15.0 min
Sample Wt:   5.667 mg Path: j:\kurve\dsr
File: KAT36        HAU

T Start Time:      0.0 min
Start Temp:    25.0 C
Final Temp:   145.0 C
Scan Rate:  200.0 C/min

$N_6 Cl_3 (1\text{-}Me Im)_3$

EP 0 589 166 B1

——— = 0164/LV+Nd Cl₃[1-MI]₃          (KAT35)

MV = 1: 0.05mol

Peak from: 100.33
.to: 194.45
Onset= 114.66
J/g =-306.21

Peak= 147.10

HEAT FLOW   (mW)

20
15
10
5
0

50.00   70.00   90.00   110.00   130.00   150.00   170.00   190.00   210.00

Temperature (C)

Date: May 05, 1993 09: 47am
Scanning Rate:   10.0 C/min
Sample Wt:   6.851 mg  Path: j:\kurve\ds
File 1: KAT35        HAU

Peak from: .13
to: 6.67
Onset: .14
J/g: -477.47

(KAT35)

= 0164/LViNb Cl₃ [1-MI]₃

MV = 1: 0.05mol
isoth.bei 147C

Peak: .92

T Start Time:    0.0 min
Start Temp:     25.0 C
Final Temp:    147.0 C
Scan Rate:  200.0 C/min

Date: May 06, 1993  4:16pm
T Final Time:  15.0 min
Sample Wt:  5.496 mg Path: j:\kurve\dsc
File: KAT35     HAU

Time (min)

Heat Flow (mW)

**Patentansprüche**

1. Verfahren zur Herstellung von Komplexsalzen mit zusätzlich koordinierten Liganden, **dadurch gekennzeichnet**, daß ein komplexbildendes Metallsalz, insbesondere der 2. und 3. Hauptgruppe des Periodensystems der Elemente, sowie der Nebengruppenelemente, mit einem Chelatliganden und/oder einer Lewis-Base, lösungsmittelfrei in stöchiometrischem Verhältnis gemäß der Reaktion

$$M_m{}^{a+}(SR^{b-})_n + xL \cdot cH + yB \rightarrow$$

$$m\,[M^{a+}(SR^{b-})_{(n-o)}L_xB_y] + o \cdot SR^{b-} + c \cdot H^+ \qquad\qquad I$$

mit

- M ein Metallion,
- SR ein Säurerest einer organischen oder anorganischen Säure,
- B eine Lewis-Base und
- L ein Chelatligand

$$m \cdot a = b \cdot (n\text{-}o) + c \cdot x \,,$$

wobei

    a = eine natürliche Zahl im Bereich von 1 - 8,
    b = eine natürliche Zahl im Bereich von 1 - 3,
    c = eine natürliche Zahl im Bereich von 0 - 4,
    m = eine natürliche Zahl im Bereich von 1 - 3,
    n = eine natürliche Zahl im Bereich von 1 - 8,
    o = eine natürliche Zahl im Bereich von 0 - 8,
    x = eine natürliche Zahl im Bereich von 0 - 4,
    y = eine natürliche Zahl im Bereich von 1 - 16,

bevorzugt 9 -12, bedeuten,
wobei (n-o) + x + y ≤ 16 ist
miteinander intensiv vermischt und bei Temperaturen von 20 bis 200 °C, mindestens jedoch bei des Schmelztemperatur des Liganden, umgesetzt werden.

**2.** Verfahren zur Herstellung von Komplexsalzen mit zusätzlich koordinierten Liganden, **dadurch gekennzeichnet**, daß ein komplexbildendes Metallsalz, insbesondere der 2. und 3. Hauptgruppe des Periodensystems der Elemente, sowie der Nebengruppenelemente, mit einem Chelatliganden und/oder einer Lewis-Base, lösungsmittelfrei in stöchiometrischem Verhältnis gemäß der Reaktion

$$M_m{}^{a+}(SR^{b-})_n L'_p B'_q + xL \cdot cH + y\,B \rightarrow$$

$$m\,[M^{a+}(SR^{b-})_{(n-o)}L'_p B'_q L_x B_y + oSR^{b-} + cH^+ \qquad\qquad II$$

- M ein Metallion,
- SR ein Säurerest einer organischen oder anorganischen Säure,
- B eine Lewis-Base und
- L ein Chelatligand
- B' eine Lewis-Base, evtl. identisch mit B
- L' ein Chelatligand, evtl. identisch mit L

$$m \cdot a = b \cdot (n\text{-}o) + p + c \cdot x,$$

wobei

    a = eine natürliche Zahl im Bereich von 1 - 8,
    b = eine natürliche Zahl im Bereich von 1 - 3,

c = eine natürliche Zahl im Bereich von 0 - 4,
m = eine natürliche Zahl im Bereich von 1 - 3,
n = eine natürliche Zahl im Bereich von 1 - 8,
o = eine natürliche Zahl im Bereich von 0 - 8,
x = eine natürliche Zahl im Bereich von 0 - 4,
y = eine natürliche Zahl im Bereich von 1 - 16,
p = eine natürliche Zahl im Bereich von 0 - 4
q = eine natürliche Zahl im Bereich von 0 - 8

sind, wobei (n-o) + p + q + x + y ≤ 16 ist.

3. Verfahren gemäß der Ansprüche 1 und 2, **dadurch gekennzeichnet**, daß die Reaktionspartner lösungsmittelfrei bei Temperaturen von 25 bis 150 °C miteinander umgesetzt werden.

4. Verfahren gemäß der Ansprüche 1 bis 3, **dadurch gekennzeichnet**, daß das gebildete Reaktionsprodukt durch sehr langsames Abkühlen bei hoher Rührerdrehzahl als feinteiliges Pulver erhalten wird.

5. Verfahren gemäß der Ansprüche 1 bis 3, **dadurch gekennzeichnet**, daß das abgekühlte Reaktionsprodukt vermahlen wird.

6. Verfahren gemäß der Ansprüche 1 bis 3, **dadurch gekennzeichnet**, daß das Reaktionsprodukt durch Versprühen als feinteiliges Pulver erhalten wird.

7. Verfahren gemäß der Ansprüche 1 bis 6, **dadurch gekennzeichnet**, daß als Chelatliganden Dioxime, alpha- und β-Hydroxycarbonylverbindungen, also Hydroxycarbonsäuren, -ketone, -aldehyde und deren Analoge oder enolisierbare 1,3-Diketone, insbesondere Acetylaceton, Benzoylaceton und deren Homologe, Dipivoloylmethan oder Dimethylglyoxim verwendet werden.

8. Verfahren gemäß der Ansprüche 1 bis 8, **dadurch gekennzeichnet**, daß als Lewis-Basen Pyridin-, Pyrimidin - oder Imidazolverbindungen, einschließlich cyclischer Ether, wie z. B. Tetrahydrofuran, aliphatische und aromatische Alkohole, Ketone, Thioether oder Merkaptane, CH-acide Pyridine, Malonsäurediester oder -dinitril, Acetessigsäureester, Cyanessigester oder Nitromethan verwendet werden.

9. Verfahren gemäß der Ansprüche 1 bis 8, **dadurch gekennzeichnet**, daß es kontinuierlich durchgeführt wird.

10. Verwendung der Komplexverbindungen hergestellt nach einem Verfahren gemäß der Ansprüche 1 bis 9, als einziger Härtungskatalysator für lagerstabile Prepregs.

11. Verwendung der Komplexverbindungen hergestellt nach einem Verfahren gemäß der Ansprüche 1 bis 9, gemäß der Ansprüche 10 und 11 zur Herstellung knet- und formbarer, vorgehärteter Epoxyharze.

12. Verwendung der Komplexverbindungen hergestellt nach einem Verfahren gemäß der Ansprüche 1 bis 9, als Härtungskatalysator für Klebemassen.

13. Verwendung der Komplexverbindungen hergestellt nach einem Verfahren gemäß der Ansprüche 1 bis 9, als alleiniger Härtungskatalysator für Epoxyharze und deren Gemische.

14. Verwendung der Komplexverbindungen hergestellt nach einem Verfahren gemäß der Ansprüche 1 bis 9, als alleiner Härtungskatalysator für Polyurethane und deren Gemische mit anderen Harzen.

## Claims

1. A process for preparing complex salts with additionally coordinated ligands, **characterized in that** a complex-forming metal salt, in particular of the 2nd and 3rd main groups of the periodic system of the elements, and of the transition elements, with a chelate ligand and/or a Lewis base, are mixed vigorously with one another without a solvent in a stoichiometric ratio in accordance with the reaction

$$M_m^{a+}(SR^{b-})_n + xL \cdot cH + yB \rightarrow m[M^{a+}(SR^{b-})_{(n-o)}L_xB_y] + o \cdot sR^{b-} + c \cdot H^+ \qquad I$$

with

- M a metal ion,
- SR an acid residue of an organic or inorganic acid,
- B a Lewis base and
- L a chelate ligand

$$m \cdot a = b \cdot (n - o) + c \cdot x,$$

wherein

$a$ = is a natural number in the range of from 1 to 8,
$b$ = is a natural number in the range of from 1 to 3,
$c$ = is a natural number in the range of from 0 to 4,
$m$ = is a natural number in the range of from 1 to 3,
$n$ = is a natural number in the range of from 1 to 8,
$o$ = is a natural number in the range of from 0 to 8,
$x$ = is a natural number in the range of from 0 to 4,
$y$ = is a natural number in the range of from 1 to 15,

preferably from 9 to 12,
wherein $(n - o) + x + y \leq 16$,
and are reacted at temperatures of from 20 to 200°C.

2. A process for preparing complex salts with additionally coordinated ligands, **characterized in that** a complex-forming metal salt, in particular of the 2nd and 3rd main groups of the periodic system of the elements, and of the transition elements, with a chelate ligand and/or a Lewis base, are mixed vigorously with one another without a solvent in a stoichiometric ratio in accordance with the reaction

$$M_m^{a+}(SR^{b-})_n L'_p B'_q + xL \cdot cH + y B \rightarrow m[M^{a+}(SR^{b-})_{(n-o)}L'_p B'_q L_x B_y + oSR^{b-} + cH^+ \qquad II$$

with

- M a metal ion,
- SR an acid residue of an organic or inorganic acid,
- B a Lewis base and
- L a chelate ligand
- B' a Lewis base, optionally identical with B
- L' a chelate ligand, optionally identical with L

$$m \cdot a = b \cdot (n-o) + p + c \cdot x,$$

wherein

$a$ = is a natural number in the range of from 1 to 8,
$b$ = is a natural number in the range of from 1 to 3,
$c$ = is a natural number in the range of from 0 to 4,
$m$ = is a natural number in the range of from 1 to 3,
$n$ = is a natural number in the range of from 1 to 8,
$o$ = is a natural number in the range of from 0 to 8,
$x$ = is a natural number in the range of from 0 to 4,

y = is a natural number in the range of from 1 to 15,
p = is a natural number in the range of from 0 to 4,
q = is a natural number in the range of from 0 to 8,

wherein $(n - o) + p + q + x + y \leq 16$,
and are reacted at temperatures of from 20 to 200°C.

3. A process according to Claims 1 and 2, **characterized in that** the reagents are reacted with one another without a solvent at temperatures of from 25 to 150°C.

4. A process according to Claims 1 to 3, **characterized in that** the reaction product formed is obtained as a fine powder by very slow cooling with a high stirrer speed.

5. A process according to Claims 1 to 3, **characterized in that** the cooled reaction product is ground.

6. A process according to Claims 1 to 3, **characterized in that** the reaction product is obtained as a fine powder by spraying.

7. A process according to Claims 1 to 6, **characterized in that** dioximes, $\alpha$; and $\beta$-hydroxycarbonyl compounds, i. e. hydroxycarboxylic acids, ketones, aldehydes and analogues thereof or enolizable 1,3-diketones, in particular acetylacetone, benzoylacetone and homologues thereof, dipivaloylmethane or dimethylglyoxime are used as chelate ligands.

8. A process according to Claims 1 to 8 [*sic*], **characterized in that** pyridine, pyrimidine or imidazole compounds, including cyclic ether, such as for example tetrahydrofuran, aliphatic and aromatic alcohols, ketones, thioethers or mercaptans, CH-acidic pyridines, malonic acid diester or malodoninitrile, acetoacetic acid ester, cyanoacetic ester or nitromethane are used as Lewis bases.

9. A process according to Claims 1 to 8, **characterized in that** it is performed continuously.

10. Use of the complex compounds prepared in accordance with a process according to Claims 1 to 9 as a single curing catalyst for prepregs which are stable in storage.

11. Use of the complex compounds prepared in accordance with a process according to Claims 1 to 9, according to Claims 10 and 11 [*sic*] for preparing kneadable and mouldable, pre-cured epoxy resins.

12. Use of the complex compounds prepared in accordance with a process according to Claims 1 to 9 as a curing catalyst for adhesive compounds.

13. Use of the complex compounds prepared in accordance with a process according to Claims 1 to 9 as a single curing catalyst for epoxy resins and mixtures thereof.

14. Use of the complex compounds prepared in accordance with a process according to Claims 1 to 9 as a single curing catalyst for polyurethanes and mixtures thereof with other resins.

**Revendications**

1. Procédé de préparation de sels complexes avec, en plus, des ligands coordinés, caractérisé en ce qu'un sel métallique complexant, notamment des 2ème et 3ème groupes principaux de la classification périodique des éléments, ainsi que des éléments des sous-groupes, est intimement mélangé, en l'absence de solvant, ensemble avec un ligand chélate et/ou une base de Lewis, dans le rapport stœchiométrique selon la réaction

$$M_m{}^{a+}(SR^{b-})_n + xL\cdot cH + yB \rightarrow m[M^{a+}SR^{b-})_{(n\text{-}o)}L_xB_y] + o\cdot SR^{b-} + c\cdot H^+ \qquad \text{I}$$

avec

- M un ion métallique,
- SR un reste acide d'un acide organique ou minéral,
- B une base de Lewis et
- L un ligand chélate

$$m \cdot a = b \cdot (n-o) + c \cdot x$$

où

a = un nombre entier dans la gamme de 1 - 8,
b = un nombre entier dans la gamme de 1 - 3,
c = un nombre entier dans la gamme de 0 - 4,
m = un nombre entier dans la gamme de 1 - 3,
n = un nombre entier dans la gamme de 1 - 8,
o = un nombre entier dans la gamme de 0 - 8,
x = un nombre entier dans la gamme de 0 - 4,
y = un nombre entier dans la gamme de 1 -15 ,

de préférence de 9 - 12, (n-o) + x + y étant ≤ 16, et
qu'ils sont mis à réagir à des températures de 20 à 200°C.

2. Procédé de préparation de sels complexes avec, en plus, des ligands coordinés, caractérisé en ce qu'un sel métallique complexant, notamment des 2ème et 3ème groupes principaux de la classification périodique des éléments, ainsi que des éléments des sous-groupes, est intimement mélangé, en l'absence de solvant, ensemble avec un ligand chélate et/ou une base de Lewis, dans le rapport stoechiométrique selon la réaction

$$M_m^{a+}(SR^{b-})_n L'_p B'_q + xL \cdot cH + y\,B \rightarrow$$

$$m\,[M^{a+}(SR^{b-})_{(n-o)} L'_p B'_q L_x B_y + oSR^{b-} + cH^+ \qquad\qquad II$$

avec

- M un ion métallique,
- SR un reste acide d'un acide organique ou inorganique,
- B une base de Lewis et
- L un ligand chélate
- B' une base de Lewis, éventuellement identique à B,
- L' un ligand chélate, éventuellement identique à L

$$m \cdot a = b \cdot (-o) + p + c \cdot x,$$

où

a = un nombre entier dans la gamme de 1 - 8,
b = un nombre entier dans la gamme de 1 - 3,
c = un nombre entier dans la gamme de 0 -4,
m = un nombre entier dans la gamme de 1 - 3,
n = un nombre entier dans la gamme de 1 - 8,
o = un nombre entier dans la gamme de 0 - 8,
x = un nombre entier dans la gamme de 0 - 4,
y = un nombre entier dans la gamme de 1 - 15,
p = un nombre entier dans la gamme de O - 4,
q = un nombre entier dans la gamme de 0 - 8,

(n-o) + p + q + x + y ≤ 16,

et qu'ils sont mis à réagir à des températures de 20 à 200°C.

**3.** Procédé selon les revendications 1 et 2,
caractérisé en ce que l'on fait réagir ensemble les partenaires réactionnels, en l'absence de solvant, à des températures de 25 à 150°C.

**4.** Procédé selon les revendications 1 à 3,
caractérisé en ce que le produit de réaction formé est obtenu sous forme de poudre finement divisée par un refroidissement très lent à une vitesse de rotation élevée de l'agitateur.

**5.** Procédé selon les revendications 1 à 3,
caractérisé en ce que le produit de réaction refroidi est broyé.

**6.** Procédé selon les revendications 1 à 3,
caractérisé en ce que le produit de réaction est obtenu sous forme de poudre finement divisée par atomisation.

**7.** Procédé selon les revendications 1 à 6,
caractérisé en ce que des dioximes, des composés alpha- et β-hydroxycarbonyles, à savoir des acides hydroxy-carboxyliques, des hydroxycétones, des hydroxyaldéhydes et leurs analogues ou des 1,3-dicétones énolisables, notamment l'acétylacétone, la benzoylacétone et leurs homologues, le dipivaloylméthane ou la diméthylglyoxime sont utilisés en tant que ligands chélates.

**8.** Procédé selon les revendications 1 à 6,
caractérisé en ce que des composés pyridiniques, pyrimidiniques ou imidazoliques, y compris des éthers cycliques, tels que par ex. le tétrahydrofuranne, des alcols aliphatiques et aromatiques, des cétones, des thioéthers ou des mercaptans, des pyridines à CH acide, des diesters maloniques ou le dinitrile malonique, des esters acétylacétiques, des esters cyanacétiques ou le nitrométhane sont utilisés comme bases de Lewis.

**9.** Procédé selon les revendications 1 à 8,
caractérisé en ce qu'il est conduit en continu.

**10.** Utilisation des complexes préparés d'après un procédé selon les revendications 1 à 9 comme catayseur de durcissement unique pour des préimprégnés stables au stockage.

**11.** Utilisation des complexes préparés d'après un procédé selon les revendications 1 à 9, selon les revendications 10 et 11 pour la fabrication de résines époxydiques prédurcies, malaxables et moulables.

**12.** Utilisation des complexes préparés d'après un procédé selon les revendications 1 à 9, comme catalyseur de durcissement pour adhésifs.

**13.** Utilisation des complexes préparés d'après un procédé selon les revendications 1 à 9, comme catalyseur de durcissement unique pour des résines époxydiques et leurs mélanges.

**14.** Utilisation des complexes préparés d'après un procédé selon les revendications 1 à 9, comme catalyseur de durcissement unique pour des résines de polyuréthannes et leurs mélanges avec d'autres résines.